# FASCICULE DE BREVET EUROPEEN

(11) **EP 1 268 628 B1**
(45) Date de publication et mention de la délivrance du brevet: **12.10.2005**
(21) Numéro de dépôt: 01936086.6
(22) Date de dépôt: 19.03.2001
(51) Int. Cl.: C08J 11/08

(54) **PROCEDE DE RECYCLAGE D'UNE MATIERE PLASTIQUE**
VERFAHREN ZUR WIEDERVERWENDUNG EINES KUNSTSTOFFMATERIALS
METHOD FOR RECYCLING A PLASTIC MATERIAL

(30) Priorité: 23.03.2000 FR 0003754
(43) Date de publication de la demande: 02.01.2003
(73) Titulaire: SOLVAY (Société Anonyme), 1050 Bruxelles (BE)
(72) Inventeur: VANDENHENDE, Bernard, B-2811 Leest (BE); DUMONT, Jean-Philippe, B-1120 Bruxelles (BE)
(74) Mandataire: Jacques, Philippe
(86) Numéro de dépôt international: PCT/EP2001/003019
(87) Numéro de publication internationale: WO 2001/070865

(56) Documents cités:
- EP-A- 0 945 481
- DATABASE WPI Week 7322 Derwent Publications Ltd., London, GB; AN 1973-31708U XP002152112 & JP 48 016987 B (TOYO TELL ME KK)

## Description

La présente invention concerne un procédé pour le recyclage d'une matière plastique.

Les matières plastiques sont abondamment utilisées pour la fabrication d'articles variés, souples ou rigides, tels que par exemple des bâches, des tissus enduits et autres éléments pour l'habillage intérieur de véhicules, des tuyaux, des châssis de fenêtres ou des câbles électriques à isolation polymérique.

Un broyage poussé de ces articles conduirait le plus souvent à un mélange de fines particules de composition hétérogène, dont la purification et la réutilisation seraient difficiles. En outre, dans le cas d'articles renforcés par des fibres (par exemple de polyester), les fibres forment souvent une sorte d'ouate qui complique fortement la réutilisation des broyats.

Différents procédés basés sur une dissolution au moyen de solvants organiques ont déjà été proposés. Ainsi, la demande de brevet EP 945481 au nom de la demanderesse propose un procédé de recyclage d'un article à base d'au moins un polymère du chlorure de vinyle, selon lequel :
(a) l'article est déchiqueté en fragments d'une dimension moyenne de 1 cm à 50 cm au cas où il excéderait ces dimensions ;
(b) les fragments d'article, secs, sont mis en contact avec un solvant capable de dissoudre le polymère, substantiellement anhydre, formant avec l'eau un azéotrope ;
(c) on provoque la précipitation du polymère dissous dans le solvant par injection de vapeur d'eau dans la solution ainsi obtenue, ce qui provoque en outre l'entraînement de l'azéotrope solvant-eau et laisse ainsi subsister un mélange essentiellement constitué d'eau et de particules solides de polymère;
(d) on recueille les particules de polymère.

Etant donné le coût du solvant et les inconvénients que son rejet dans l'environnement pourrait présenter, il est souhaitable de traiter la fraction azéotropique afin d'en récupérer le solvant. La solution proposée dans cette demande de brevet consiste à utiliser du CaCl2 comme agent de séparation de phases provoquant sa décantation de l'azéotrope (sous forme liquide) en une phase aqueuse et une phase essentiellement constituée de solvant. Ce CaCl2 se retrouve dans la phase aqueuse et peut être réutilisé comme agent de séparation de phases moyennant reconcentration par évaporation de l'eau. Cette opération est coûteuse tant en termes de besoins énergétiques, que d'appareillage étant donné la corrosivité du CaCl2.

Ce type de problème, à savoir la récupération des constituants d'un mélange solvant - non solvant est en fait un phénomène qui se rencontre dans la plupart des procédés de recyclage de matières plastiques impliquant la mis en solution dans un solvant et la précipitation de la matière plastique dissoute par un non solvant.

La présente invention est basée sur la constatation surprenante que l'addition de certains agents de séparation de phases au mélange solvant - non solvant d'une matière plastique permet non seulement de faciliter la décantation de ce mélange, mais aussi, d'augmenter le pouvoir de dissolution de la phase riche en solvant vis-à-vis de la matière plastique en question. En conséquence, le procédé devient plus souple, moins consommateur d'énergie et moins coûteux.

Dès lors, la présente invention vise à fournir un procédé de recyclage qui soit simple, économique, sûr, peu polluant, et qui permette de recueillir des matières plastiques d'une pureté élevée.

Plus précisément, la présente invention concerne un procédé de recyclage d'une matière plastique selon lequel la matière plastique est mise en contact avec un solvant capable de la dissoudre et la matière plastique dissoute dans le solvant est précipitée avec un non solvant en présence d'un agent de séparation de phases, dans lequel l'agent de séparation de phases est compatible avec le solvant et incompatible avec le non solvant, est également présent lors de la mise en contact de la matière plastique avec le solvant et améliore la dissolution de la matière plastique par le solvant.

La matière plastique en question peut être de toute nature. Il peut s'agir d'un polymère apolaire, tel qu'un polymère de l'éthylène (PE) ou du propylène (PP). Il peut également s'agir d'un polymère polaire tel qu'un polymère du chlorure de vinyle (PVC) ou du chlorure de vinylidène (PVDC). De bons résultats ont été obtenus avec le PVC. Par P VC, on entend désigner tout homo- ou copolymère contenant au moins 50 % en poids de chlorure de vinyle.

La matière plastique peut se présenter sous une forme quelconque. Il peut par exemple s'agir de déchets de polymérisation, de compoundage ou de mise en oeuvre, éventuellement à l'état liquide ou pâteux, éventuellement même en solution dans un solvant. Il peut également s'agir d'articles solides comprenant un ou plusieurs additifs usuels tels que par exemple plastifiants, stabilisants, antioxydants, agents ignifugeants, pigments, matières de charge, etc., y compris des fibres de renforcement. Ces fibres peuvent être de toute nature, naturelles ou synthétiques ; on peut notamment utiliser des fibres de verre, de cellulose ou de matière plastique. Il s'agit souvent de fibres de matière plastique, et en particulier de fibres de polyester. Le polyéthylène-téréphtalate (PET) donne de bons résultats, notamment pour le renforcement de feuilles utilisées comme bâches. Le diamètre des fibres est habituellement de l'ordre de 10 à 100 µm. Dans les feuilles renforcées, il s'agit souvent de fibres longues, dont la longueur peut atteindre plusieurs mètres. Il peut toutefois également s'agir de fibres plus courtes, de quelques millimètres à quelques centimètres de longueur, formant éventuellement un tissu, un non tissé ou un feutre. A titre illustratif, les fibres peuvent représenter de 1 à 50% du poids d'une feuille renforcée.

Ces articles peuvent se présenter sous la forme de tuyaux souples ou rigides, de récipients, de feuilles pour le revêtement des sols, de bâches, de châssis de fenêtres, de gaines d'isolation de câbles électriques, etc. Ils peuvent avoir été fabriqués par toute technique connue : extrusion, enduction, injection, etc. Il peut s'avérer intéressant de déchiqueter ces articles de manière à les réduire en fragments de taille réduite, aisés à manipuler et à dissoudre dans le procédé selon l'invention. Des traitements de déchiquetage adéquats sont décrits dans la demande de brevet EP 945481 susmentionnée, et sont incorporés par référence dans la présente demande.

Dans le procédé selon l'invention, la matière plastique est mise en contact avec un solvant capable de la dissoudre, en présence d'un agent de séparation de phases. Dans le cas où l'article est renforcé par des fibres, le mélange solvant - agent de séparation de phases ne doit cependant pas provoquer la dissolution de constituants autres que la matière plastique à recycler. La récupération d'éventuels renforts ou "accessoires" tels qu'oeillets métalliques, étiquettes, conducteurs métalliques etc. incorporés dans ou joints à la matière plastique et qui n'en auraient pas été enlevés avant qu'elle ne soit soumise au procédé selon l'invention, est décrite dans la demande de brevet EP 945481 et incorporée par référence.

L'agent de séparation de phases selon la présente invention est par définition un composé qui favorise la décantation des mélanges solvant - non solvant de la matière plastique. Selon la présente invention, cet agent est en outre compatible avec le solvant, non compatible avec le non solvant et il améliore la dissolution de la matière plastique par le solvant. Ainsi, cet agent de séparation de phases sera quasi absent dans la phase riche en non solvant issue de la décantation, ce qui peut être avantageux dans le cas où le non solvant peut être rejeté à l'environnement (ex. si ce non solvant est de l'eau) et ce qui favorise également l'obtention d'une matière plastique substantiellement exempte de cet agent.

La dissolution s'effectue généralement sous une pression au moins égale à la pression atmosphérique, voire au moins égale à 1.5 bars. Avantageusement, cette pression n'excède pas 10 bars, de préférence 5 bars.

La température de dissolution est généralement d'au moins 75 °C, voire 100 °C ; elle n'excède généralement pas 125 °C, voire 110 °C.

Il peut en outre s'avérer avantageux de travailler sous atmosphère inerte, par exemple sous azote, pour éviter tout risque d'explosion et de dégradation du solvant, du non solvant et/ou de l'agent de séparation de phases.

La quantité de solvant et d'agent de séparation de phases à utiliser doit être choisie de façon à éviter que l'augmentation de viscosité provoquée par la dissolution de la matière plastique ne perturbe le bon déroulement du procédé (filtration, ...). On préfère que, lors de l'étape de dissolution, de matière plastique n'excède pas 200 g par litre de mélange solvant - agent de séparation de phases, et en particulier 100 g/l.

Dans la perspective d'une nouvelle mise en oeuvre de la matière plastique ainsi recueillie, une variante avantageuse du procédé selon l'invention consiste à incorporer au solvant, outre l'agent de séparation de phases, avant ou pendant l'étape de dissolution de la matière plastique, un ou plusieurs additifs (stabilisants, plastifiants, etc.), dont les natures et les quantités soient adaptées aux propriétés que l'on souhaite conférer à la matière plastique recyclée. Il est souhaitable, dans ce cas, que le ou les additifs ainsi incorporés soient solubles dans le solvant utilisé. D'éventuels additifs insolubles peuvent cependant être dispersés finement dans le solvant.

Après la dissolution de la matière plastique et l'éventuelle séparation des constituants non dissous, on provoque la précipitation de la matière plastique dissoute éventuellement en réduisant la pression (généralement jusqu'à la pression atmosphérique), ce qui provoque généralement une diminution de la température, mais surtout en ajoutant dans le solvant contenant la matière plastique dissoute, un non solvant en une quantité suffisante pour provoquer la précipitation complète de la matière plastique dissoute. Avantageusement, cette précipitation est réalisée par l'injection conjointe de non solvant sous forme liquide et sous forme gazeuse, ce qui accélère la précipitation de la matière plastique. Il n'est pas nuisible que le non solvant injecté contienne éventuellement une faible concentration de solvant ; ceci est intéressant dans la mesure où, comme exposé ci-après, une éventuelle étape ultérieure du procédé peut précisément fournir une telle source de non solvant, que l'on peut ainsi réutiliser sans épuration particulière.

En vue de réduire la taille des particules obtenues par précipitation, il est avantageux que cette précipitation ait lieu en présence d'un agent dispersant. Du point de vue pratique, celui-ci est avantageusement ajouté au solvant dès le début de la dissolution de la matière plastique. Alternativement, cet agent dispersant peut être ajouté en même temps que le non solvant utilisé pour la précipitation (soit dans le même flux, soit séparément), mais cette manière de procéder est plus difficile à piloter et pourrait mener à un manque d'homogénéisation du milieu. Par agent dispersant selon cette variante de l'invention, on entend désigner des agents tensioactifs tels que la bentonite, l'alcool polyvinylique, la gélatine, les esters ou éthers cellulosiques, les (co)polymères hydrosolubles... Les éthers cellulosiques donnent de bons résultats. L'agent dispersant selon cette variante de l'invention est utilisé en une quantité généralement supérieure ou égale à 0.001 % en poids par rapport au poids de PVC, de préférence supérieure ou égale à 0.01%, ou mieux, supérieure ou égale à 0.1 %. La teneur en agent dispersant est généralement inférieure ou égale à 5%, voire 2%, ou mieux, 1 %.

Un autre moyen permettant de réduire la granulométrie du produit obtenu est d'ajouter le non solvant de manière progressive dans le solvant contenant la matière plastique dissoute et de réduire la pression en dessous de la pression atmosphérique au cours de l'ajout progressif de non solvant. On observe ainsi généralement une inversion de phases, c.à.d. que le milieu de précipitation passe d'une dispersion du non solvant dans le solvant, à une dispersion du solvant dans le non solvant. Ce phénomène s'accompagne d'une chute brusque de la viscosité et c'est à partir de ce moment là que la matière plastique, qui était dissoute, précipite sous forme de grains de plus en plus denses. Il est particulièrement avantageux que la réduction de pression recommandée ci-dessus ait lieu avant l'inversion de phase, de manière à ce que celle-ci ait lieu à pression réduite. Selon cette variante avantageuse de la présente invention, la pression est généralement inférieure ou égale à 0.9 bar, voire 0.8 bar et de préférence, 0.7 bar lors de l'inversion de phases. Cette pression est généralement supérieure à 0.2 bar, voire à 0.4 bar. Un autre avantage d'une diminution de la pression lors de l'ajout progressif de non solvant est qu'elle permet de reculer le seuil de concentration critique en matière plastique à partir duquel on assiste à une prise en masse du milieu. Elle permet donc en quelque sorte de traiter plus de polymère avec une même quantité de solvant.

Enfin, pour réduire la granulométrie au maximum et obtenir un produit exempt d'agglomérats, il est avantageux d'à la fois utiliser un agent dispersant, et de réduire la pression en dessous de la pression atmosphérique au cours de l'ajout progressif de non solvant.

Le solvant capable de dissoudre la matière plastique est de préférence choisi parmi les liquides ayant un paramètre de solubilité (dont une définition et des valeurs expérimentales figurent dans "Properties of Polymers", D.W. Van Krevelen, Edition de 1990, pp.200-202, ainsi que dans "Polymer Handbook", J. Brandrup and E.H. Immergut, Editors, Second Edition, p.IV-337 à IV-359) voisin du paramètre de solubilité de la matière plastique à dissoudre. Quant au non solvant de la matière plastique, il est de préférence choisi comme ayant un paramètre de solubilité fort différent de celui de la matière plastique à dissoudre. Il est entendu que par solvant et non solvant, on entend aussi bien des substances pures que des mélanges de substances. L'agent de séparation de phases présente de préférence également un paramètre de solubilité différent de celui de la matière plastique à dissoudre.

Selon une variante préférée du procédé selon l'invention, le paramètre de solubilité du solvant est voisin de celui de la matière plastique et celui de l'agent de séparation de phases est :
- inférieur au paramètre de solubilité de la matière plastique si le paramètre de solubilité du non solvant est supérieur à celui de la matière plastique
- supérieur au paramètre de solubilité de la matière plastique si le paramètre de solubilité du non solvant est inférieur à celui de la matière plastique.

Il est important de noter que de nombreux déchets de matière plastique contiennent une quantité non négligeable d'eau qui, de par sa polarité, présente un paramètre de solubilité nettement plus élevé que celui des matières plastiques et est de ce fait un non solvant de celles-ci. En conséquence, selon une variante préférée du procédé selon la présente invention, le non solvant choisi pour la précipitation de la matière plastique dissoute dans le solvant est l'eau et l'agent de séparation de phases, un composé organique apolaire (qui présente de ce fait un paramètre de solubilité nettement plus faible que celui de l'eau).

Selon une variante préférée du procédé selon l'invention, l'agent de séparation de phases et le solvant sont substantiellement éliminés du milieu de précipitation par évaporation à une température inférieure à la température d'ébullition du non solvant. Cette élimination est possible notamment par le choix de substances ayant un point d'ébullition inférieur à celui du non solvant et/ou présentant un azéotrope avec ce dernier.

Il est avantageux, dans le contexte du procédé selon l'invention, que le solvant utilisé soit miscible avec le non solvant, et forme avec lui un mélange azéotropique. Dans ce cas, une grande partie du solvant peut être éliminé par évaporation du milieu de précipitation sous forme de vapeur de composition azéotropique.

Dans certains cas, les vapeurs contenant le solvant et l'agent de séparation de phases contiennent également une fraction substantielle de non solvant. Ces vapeurs sont alors avantageusement condensées et soumises à une décantation et à une élimination subséquente de la phase riche en non solvant avant réutilisation pour la dissolution de la matière plastique. Cette réutilisation peut avoir lieu lors d'un procédé ultérieur, s'il s'agit d'un procédé discontinu (ou batch) de recyclage de la matière plastique, ou faire partie intégrante du procédé lui-même dans le cas d'un procédé continu. La phase riche en non solvant résultant de la décantation peut également être réutilisée lors de la précipitation de la matière plastique, ainsi que déjà évoqué précédemment.

Un avantage important du procédé selon la présente invention est donc qu'il peut fonctionner en boucle fermée, sans générer de rejets, étant donné qu'aussi bien la phase contenant le solvant et l'agent de séparation de phases que celle contenant le non solvant peuvent être recyclées et réutilisées dans le procédé.

Selon une autre variante avantageuse du procédé selon la présente invention, les vapeurs contenant le solvant et l'agent de séparation de phases sont simplement condensées et réutilisées telles quelles à la dissolution de la matière plastique, sans décantation préalable. Ceci est avantageux lorsque ces vapeurs contiennent peu de non solvant et/ou qu'il est possible de travailler en équilibre di-phasique, avec deux phases (une phase riche en solvant et contenant substantiellement tout l'agent de séparation de phases, puisque celui-ci est compatible avec le solvant et non compatible avec le non solvant ; et une phase riche en non solvant). La phase riche en solvant assure alors par le choix correct des concentrations en agent de séparation (requises pour obtenir le bon paramètre de solubilité), la dissolution sélective de la matière plastique. La phase riche en non-solvant ne perturbe pas cette dissolution. Etant alors en système di-phasique, la phase riche en solvant devient tout à fait insensible à la quantité de non-solvant ajoutée (par exemple, à l'eau contenue dans la matière plastique à recycler). Seule la quantité de phase riche en non solvant augmente. Le procédé selon cette variante de l'invention est donc plus souple au niveau de la gamme des concentrations en non solvant tolérées. Un autre avantage important de cette variante est donc qu'il n'est plus nécessaire d'éliminer préalablement (par séchage) ou a posteriori l'eau amenée avec la matière plastique à recycler. Il suffit alors dans le procédé selon l'invention, de choisir l'eau comme non solvant et l'eau contenue dans la matière plastique est alors simplement déplacée vers la phase riche en non solvant. Il s'agit d'une importante économie d'énergie étant donnée l'importante chaleur de vaporisation de l'eau.

Le procédé selon l'invention a été appliqué avec succès au recyclage du PVC, en choisissant comme solvant, la MEK (méthyléthylcétone), comme non solvant, l'eau, et comme agent de séparation de phases, un hydrocarbure aliphatique ayant de 5 à 7 atomes de carbone. D'excellents résultats ont été obtenus en choisissant le n-hexane comme agent de séparation de phases.

Les caractéristiques du procédé selon la présente invention peuvent avantageusement être intégrées dans tout procédé où la matière plastique est le PVC et où :
(a) le PVC est mis en contact avec le solvant et l'agent de séparation de phases, et est dissous;
(b) on provoque la précipitation du PVC dissous dans le solvant par injection de vapeur d'eau dans la solution ainsi obtenue, ce qui permet d'éliminer le solvant et l'agent de séparation de phases par évaporation et laisse ainsi subsister un mélange essentiellement constitué d'eau et de particules solides de PVC;
(c) on recueille les particules de PVC.

De manière plus précise, les caractéristiques du procédé selon la présente invention peuvent être intégrées dans le procédé décrit dans la demande
EP 945481 et introduit par référence. Dans ce cas, il est avantageux de choisir un procédé batch, qui se déroule en boucle avec récupération des vapeurs contenant le solvant et l'agent de séparation de phases, condensation et recyclage d'une fraction ou de la totalité de celles-ci à la dissolution dans le batch suivant. Dans ce cas, de bons résultats ont été obtenus avec comme solvant, la MEK et comme agent de séparation de phases, le n-hexane. L'agent de séparation de phases est ajouté lors du premier batch, soit à l'étape de dissolution, soit après la condensation des vapeurs. La deuxième solution a donné de bons résultats. Avant le recyclage (d'une fraction) des vapeurs condensées, il peut s'avérer intéressant de les laisser décanter sous l'action de l'agent de séparation de phases et d'éliminer la phase riche en non solvant. Alternativement, on peut recycler la totalité des vapeurs condensées, à condition d'adapter la quantité d'agent de séparation de phases utilisé. En effet, dans ce cas-là, le milieu de dissolution contient une quantité importante de non solvant et il faut suffisamment d'agent de séparation de phases pour contrebalancer l'effet négatif du non solvant sur la dissolution de la matière plastique. Avec certains composés, tels que la MEK (comme solvant), l'eau (comme non solvant) et le n-hexane (comme agent de séparation de phases), on assiste à la formation de deux phases lors de la dissolution. Dans ce cas, comme la teneur en eau totale du milieu est généralement d'au moins 5% (en poids), on veillera à choisir une teneur en hexane d'au moins 5% également (étant donné que les reste du milieu est constitué de MEK) afin d'obtenir une phase riche en MEK capable de dissoudre le PVC sur une gamme de températures acceptable. De préférence, on veillera à ce que la teneur en eau n'excède pas 15%, ce qui permet de limiter la teneur en hexane à 30%.

### Exemple 1

On a procédé à une campagne d'essais impliquant les étapes suivantes :
1. on a mis en solution 15 kg de PVC homopolymère dans 147 kg de MEK. et 8 kg d'eau (provenant des déchets de PVC, qui n'ont pas été séchés avant dissolution), sous une pression de +/- 3.5 bara (bar absolu) et à une température de 110 °C (cette température étant nécessaire à la dissolution du PVC en 10 min), dans un autoclave agité de 2501 de capacité utile;
2. on a détendu la solution à 1 bara et on a injecté 90 kg d'eau (60 kg sous forme de vapeur, et 30 kg sous forme liquide) dedans; on a ainsi précipité le PVC dissous ; tant que le milieu contenait encore de la MEK, la température est restée approximativement égale à 74 °C (température d'ébullition de l'azéotrope à 1 bara); lorsque la quasi-totalité de la MEK a été entraînée, la température a monté pour atteindre 100°C et y a été maintenue durant 30 min ;
3. on a recueilli les vapeurs et on les a condensées à 30°C ; on y a ajouté du n-hexane de manière à obtenir un mélange comprenant 170 kg de MEK (78.9% en poids), 23 kg d'eau (10.8%) et 22 kg d'hexane (10.3%) ;
4. on a ensuite agité vigoureusement le mélange et on l'a laissé décanter 30 min à 30°C ;
5. on a prélevé 155 kg de la phase riche en solvant qui comprend 83.5% de MEK, 5% d'eau et 11.5% d'hexane ;
6. on l'a chauffée à 115°C sous 4.4 bara et on l'a transvasée dans le réacteur de dissolution ;
7. on a opéré une nouvelle dissolution de 15 kg de PVC dans un milieu contenant 83.5% de MEK, 5% d'eau et 11.5% d'hexane ; cette fois, une température de 90°C environ a suffit à une dissolution aisée du PVC en 10 min sous 2.8 bara ;
8. on a détendu la solution à 1 bara et on y a injecté 90 kg d'eau (60 kg sous forme de vapeur, et 30 kg sous forme liquide) ; on a assisté à la précipitation du PVC dissous ; on a collecté et condensé les vapeurs ;
9. on les a agitées puis laissé décanter durant 5 min ; on a à nouveau effectué un prélèvement de 155 kg de la phase riche en solvant qui comprend 83.5 % de MEK, 5 % d'eau et 11.5 % d'hexane ;
10. on a a nouveau effectué une dissolution de 15 kg de PVC dans un milieu contenant 83.5 % de MEK, 5 % d'eau et 11.5 % d'hexane à une température de 90 °C en 10 min.

On a mesuré qu'après centrifugation, le PVC séparé de la phase aqueuse ne contenait que 60 ppm de MEK et 13 ppm d'hexane et que l'eau de précipitation ne contenait que 100 ppm de MEK et 10 ppm d'hexane.

### Exemple 2

On a procédé à une campagne d'essais impliquant les étapes suivantes :
1. on a mis en solution 15 kg de PVC homopolymère dans 147 kg de MEK et 8 kg d'eau (provenant des déchets de PVC, qui n'ont pas été séchés avant dissolution), sous une pression de ± 3.5 bara et à une température de 110°C (cette température étant nécessaire à la dissolution du PVC en 10 min), dans un autoclave agité de 2501 de capacité;
2. on a détendu la solution à 1 bara et on y a injecté 90 kg d'eau (60 kg sous forme de vapeur, et 30 kg sous forme liquide) ; on a ainsi précipité le PVC dissous ; tant que le milieu contenait encore de la MEK, la température est restée approximativement égale à 74 °C (température d'ébullition de l'azéotrope à 1 bara); lorsque la quasi-totalité de la MEK a été entraînée, la température est montée pour atteindre 100°C et y a été maintenue durant 30 min ;
3. on a recueilli les vapeurs et on les a condensées à 30°C ; on y a ajouté du n-hexane de manière à obtenir un mélange de 155 kg contenant 109.4 kg de MEK (71 % en poids), 22.4 kg d'eau (14 %) et 23.3 kg d'hexane (15%);
4. on a prélevé de ce mélange tel quel pour la dissolution suivante ;
5. on l'a chauffé à 110°C sous 4.4 bara et on l'a transvasé dans le réacteur de dissolution ;
6. on a effectué une nouvelle dissolution de 15 kg de PVC dans un milieu contenant 71% de MEK, 14 % d'eau et 15 % d'hexane ; cette fois, une température de 90°C environ a suffit à une dissolution aisée du PVC en 10 min sous 3.3 bara ;
7. on a détendu la solution à 1 bara et on y a injecté 90 kg d'eau (60 kg sous forme de vapeur, et 30 kg sous forme liquide) ; on a ainsi précipité le PVC dissous ; on a recueilli et condensé les vapeurs ;
8. on a prélevé une partie de ces vapeurs condensées pour obtenir la même proportion et les même masses qu'au point 3 ci dessus.
9. on a effectué une nouvelle dissolution de 15 kg de PVC dans un milieu contenant 71% de MEK, 14 % d'eau et 15 % d'hexane ; cette fois encore, une température de 90°C a suffit à obtenir la dissolution du PVC en 10 min sous 3.3 bara.

### Exemple 3

1. on a préparé 155 kg d'une solution comprenant 82 % de MEK, 5% d'eau et 13 % d'hexane ;
2. on l'a chauffée à 115°C sous 4.4 bara et on l'a transvasée dans le réacteur de dissolution ;
3. on a opéré une dissolution de 15.5 kg de PVC dans ce milieu à 100°C en 10 min et sous 2.8 bara ;
4. on a détendu la solution à 1 bara et on y a injecté progressivement de la vapeur et de l'eau sous forme liquide (60 kg au total). Lorsqu'un régime stable d'injection vapeur a été atteint, on a réduit la pression du réacteur à 0.65 bara pour que le changement de phases et la précipitation se fassent à une température réduite de 63.8 à 66 °C ;
5. on a recueilli du PVC sous forme de particules ayant un diamètre moyen de 375 µm et dont 90 % des particules sont inférieures à 489 µm.

### Exemple 4

1. on a préparé 155 kg d'une solution comprenant 82 %de MEK, 5% d'eau et 13 % d'hexane ;
2. on l'a chauffée à 115°C sous 4.4 bara et on l'a transvasée dans le réacteur de dissolution ;
3. on a effectué la dissolution de 14 kg de PVC dans cette solutiton à une température de 100°C, en 10 min et sous 2.8 bara ;
4. on a détendu la solution à 1 bara et on y a injecté progressivement de la vapeur et de l'eau sous forme liquide (60 kg au total). On a maintenu le réacteur à pression atmosphérique durant l'inversion de phases et la précipitation, qui ont eu lieu à une température de 72 à 75°C ;
5. on a recueilli du PVC ayant un diamètre moyen de 621 µm et dont 90 % des particules sont inférieures à 883 µm.

### Exemple 5

1. on a préparé 155 kg d'une solution comprenant 82 % de MEK, 5% d'eau et 13 % d'hexane ;
2. on l'a chauffée à 115°C sous 4.4 bara et on l'a transvasée dans le réacteur de dissolution ;
3. on a effectué la dissolution de 14 kg de PVC dans cette solution à une température de 100°C, en 10 min sous 2.8 bara ;
4. on a détendu la solution à 1 bara et on y a injecté progressivement de la vapeur et de l'eau sous forme liquide (60 kg au total). Lorsqu'un régime stable d'injection vapeur a été atteint, on a réduit la pression du réacteur à 0.55 bara, et la précipitation et l'inversion de phases ont eu lieu à une température réduite 64 à 65 °C ;
5. on a recueilli du PVC ayant un diamètre de particules moyen de 314 µm et dont 90 % des particules sont inférieure à 443 µm.

### Exemples 6, 7 et 8

1. on a préparé une solution comprenant 82 % de MEK, 5% d'eau et 13 % d'hexane
2. on a effectué la dissolution de 250 g de PVC dans 2667 g de cette solution dans un réacteur en verre de 51
3. on y a injecté du dispersant (Méthocel K100 (éther cellulosique)) dans les quantités reprises dans le tableau ci dessous,
4. on a précipité le PVC dissout par injection de vapeur à pression atmosphérique

Le tableau ci-dessous résume les résultats obtenus.

| **Exemple** | **[Agent dispersant] (%)** | **diamètre moyen (µm)** |
|---|---|---|
| 6 | 0 | 480 |
| 7 | 0.1 | 376 |
| 8 | 0.2 | 325 |

### Exemple 9

1. on a préparé 155 kg d'une solution comprenant 82 % de MEK, 5% d'eau et 13 % d'hexane ;
2. on l'a chauffée à 115°C sous 4.4 bara et on l'a transvasée dans le réacteur de dissolution ;
3. on a effectué la dissolution de 17.25 kg de PVC dans cette solution à une température de 100°C environ, en 10 min et sous 2.8 bara ;
4. on a détendu la solution à 1 bara et on y a injecté progressivement de la vapeur et de l'eau sous forme liquide (60 kg au total). On a maintenu le réacteur à pression atmosphérique durant l'inversion de phases et la précipitation, qui ont eu lieu à température réduite de 72 à 75 °C ;
5. on a recueilli du PVC de granulométrie très grossière, dont seulement 76% passe à travers un tamis de 1 mm .

### Exemple 10

1. on a préparé 155 kg d'une solution comprenant 82 % de MEK, 5% d'eau et 13 % d'hexane ;
2. on l'a chauffée à 115°C sous 4.4 bara et on l'a transvasée dans le réacteur de dissolution ;
3. on a effectué la dissolution de 16.7 kg de PVC dans cette solution à une température de 100°C, en 10 min et sous 2.8 bara ;
4. on a introduit lors de la dissolution, le même agent de dispersion que dans les exemples 6 à 8 à raison de 0.2 % en poids par rapport au PVC.
5. on a détendu la solution à 1 bara et on y a injecté progressivement de la vapeur et de l'eau sous forme liquide (60 kg au total) . Lorsqu'un régime stable d'injection de vapeur a été atteint, on a réduit la pression à 0.7 bara dans le réacteur et l'inversion de phases et la précipitation ont eu lieu à une température réduite de 64 à 65 °C;
6. le PVC récupéré possède une granulométrie nettement plus fine, 99.8 % du produit passant à travers un tamis de 1 mm.

## Revendications

1. Procédé de recyclage d'une matière plastique selon lequel la matière plastique est mise en contact avec un solvant capable de la dissoudre et la matière plastique dissoute dans le solvant est précipitée avec un non solvant en présence d'un agent de séparation de phases, dans lequel l'agent de séparation de phases est compatible avec le solvant et incompatible avec le non solvant, est également présent lors de la mise en contact de la matière plastique avec le solvant et améliore la dissolution de la matière plastique par le solvant.

2. Procédé selon la revendication 1, dans lequel la précipitation de la matière plastique a lieu en présence d'un agent dispersant.

3. Procédé selon l'une quelconque des revendications précédentes, dans lequel on ajoute le non solvant de manière progressive dans le solvant contenant la matière plastique dissoute et dans lequel on réduit la pression en dessous de la pression atmosphérique au cours de l'ajout progressif de non solvant.

4. Procédé selon l'une quelconque des revendications précédentes, dans lequel le paramètre de solubilité du solvant est voisin de celui de la matière plastique et celui de l'agent de séparation de phases est :
- inférieur au paramètre de solubilité de la matière plastique si le paramètre de solubilité du non solvant est supérieur à celui de la matière plastique
- supérieur au paramètre de solubilité de la matière plastique si le paramètre de solubilité du non solvant est inférieur à celui de la matière plastique.

5. Procédé selon l'une quelconque des revendications précédentes, dans lequel le non solvant est l'eau et l'agent de séparation de phases, un composé organique apolaire.

6. Procédé selon l'une quelconque des revendications précédentes, dans lequel le solvant et l'agent de séparation de phases sont substantiellement éliminés du milieu de précipitation par évaporation à une température inférieure à la température d'ébullition du non solvant.

7. Procédé selon la revendication 6 , où le solvant est miscible avec le non solvant et forme avec lui un mélange azéotropique.

8. Procédé selon la revendication 6 ou 7, dans lequel les vapeurs contenant le solvant et l'agent de séparation de phases contiennent également une fraction substantielle de non solvant, et dans lequel ces vapeurs sont condensées et sont soumises à une décantation et à une élimination subséquente de la phase riche en non solvant avant réutilisation pour la dissolution de la matière plastique.

9. Procédé selon la revendication 6 ou 7, dans lequel les vapeurs contenant le solvant et l'agent de séparation de phase sont condensées et réutilisées telles quelles à la dissolution de la matière plastique, sans décantation préalable.

10. Procédé selon l'une quelconque des revendications précédentes, où la matière plastique est le PVC, le solvant est la MEK, le non solvant est l'eau et l'agent de séparation de phases est un hydrocarbure aliphatique ayant de 5 à 7 atomes de carbone.

11. Procédé selon la revendication 8, où l'agent de séparation de phases est le n-hexane.

12. Procédé selon l'une quelconque des revendications précédentes, dans lequel la matière plastique est le PVC et selon lequel :
(a) le PVC est mis en contact avec le solvant et l'agent de séparation de phases, et est dissous;
(b) on provoque la précipitation du PVC dissous dans le solvant par injection de vapeur d'eau dans la solution ainsi obtenue, ce qui permet d'éliminer le solvant et l'agent de séparation de phases par évaporation et laisse ainsi subsister un mélange essentiellement constitué d'eau et de particules solides de PVC;
(c) on recueille les particules de PVC.

## Patentansprüche

1. Verfahren zum Recyclieren eines Kunststoffmaterials, wonach das Kunststoffmaterial mit einem zum Auflösen des Materials befähigten Lösungsmittel in Kontakt gebracht wird und das im Lösungsmittel gelöste Kunststoffmaterial mit einem Nicht-Lösungsmittel in Gegenwart eines Phasentrennmittels ausgefällt wird, in welchem Verfahren das Phasentrennmittel mit dem Lösungsmittel verträglich und mit dem Nicht-Lösungsmittel unverträglich ist, auch beim Inkontaktbringen des Kunststoffmaterials mit dem Lösungsmittel zugegen ist und die Auflösung des Kunststoffmaterials durch das Lösungsmittel verbessert.

2. Verfahren nach Anspruch 1, worin die Ausfällung des Kunststoffmaterials in Gegenwart eines Dispergiermittels erfolgt.

3. Verfahren nach einem der vorstehenden Ansprüche, worin das Nicht-Lösungsmittel in progressiver Weise dem das aufgelöste Kunststoffmaterial enthaltenden Lösungsmittel zugesetzt wird und worin der Druck im Laufe der progressiven Zugabe des Nicht-Lösungsmittels unter den Atmosphärendruck herabgesetzt wird.

4. Verfahren nach einem der vorstehenden Ansprüche, worin der Löslichkeitsparameter des Lösungsmittels in der Nähe desjenigen des Kunststoffmaterials liegt und der Löslichkeitsparameter des Phasentrennmittels :
- unter dem Löslichkeitsparameter des Kunststoffmaterials liegt, wenn der Löslichkeitsparameter des Nicht-Lösungsmittels über demjenigen des Kunststoffmaterials liegt,
- über dem Löslichkeitsparameter des Kunststoffmaterials liegt, wenn der Löslichkeitsparameter des Nicht-Lösungsmittels unter demjenigen des Kunststoffmaterials liegt.

5. Verfahren nach einem der vorstehenden Ansprüche, worin das Nicht-Lösungsmittel Wasser ist und das Phasentrennmittel eine apolare organische Verbindung ist.

6. Verfahren nach einem der vorstehenden Ansprüche, worin das Lösungsmittel und das Phasentrennmittel im Wesentlichen aus dem Fällungsmilieu durch Verdampfen bei einer Temperatur unter der Siedetemperatur des Nicht-Lösungsmittels abgetrennt werden.

7. Verfahren nach Anspruch 6, worin das Lösungsmittel mit dem Nicht-Lösungsmittel mischbar ist und mit ihm ein azeotropes Gemisch ausbildet.

8. Verfahren nach Anspruch 6 oder 7, worin die das Lösungsmittel und das Phasentrennmittel enthaltenden Dämpfe auch einen substantiellen Anteil des Nicht-Lösungsmittels enthalten und worin diese Dämpfe kondensiert werden und einem Dekantieren und einer anschließenden Abtrennung der an Nicht-Lösungsmittel reichen Phase unterzogen werden, bevor eine Wiederverwendung zum Auflösen des Kunststoffmaterials erfolgt.

9. Verfahren nach Anspruch 6 oder 7, worin die das Lösungsmittel und das Phasentrennmittel enthaltenden Dämpfe kondensiert werden und, so wie sie sind, ohne vorangehendes Dekantieren zum Auflösen des Kunststoffmaterials wiederverwendet werden.

10. Verfahren nach einem der vorstehenden Ansprüche, worin das Kunststoffmaterial PVC ist, das Lösungsmittel MEK ist, das Nicht-Lösungsmittel Wasser ist und das Phasentrennmittel ein aliphatischer Kohlenstoffwasserstoff mit 5 bis 7 Kohlenstoffatomen ist.

11. Verfahren nach Anspruch 8, worin das Phasentrennmittel n-Hexan ist.

12. Verfahren nach einem der vorstehenden Ansprüche, worin das Kunststoffmaterial PVC ist und wonach
(a) das PVC mit dem Lösungsmittel und dem Phasentrennmittel in Kontakt gebracht und aufgelöst wird;
(b) durch Einspritzen von Wasserdampf in die so erhaltene Lösung das Ausfällen des im Lösungsmittel aufgelösten PVC herbeigeführt wird, wodurch das Lösungsmittel und das Phasentrennmittel durch Verdampfen beseitigt werden können und solcherart ein Gemisch zurückbleibt, das im Wesentlichen aus Wasser und aus festen PVC-Teilchen besteht;
(c) die PVC-Teilchen gewonnen werden.

## Claims

1. Process for recycling a plastic, according to which the plastic is brought into contact with a solvent capable of dissolving the same and the plastic dissolved in the solvent is precipitated using a non-solvent in the presence of a phase-separating agent, in which the phase-separating agent is compatible with the solvent and incompatible with the non-solvent, and is also present when the plastic is brought into contact with the solvent, and improves the dissolution of the plastic by the solvent.

2. Process according to Claim 1, in which the precipitation of the plastic takes place in the presence of a dispersing agent.

3. Process according to any one of the preceding claims, in which the non-solvent is added gradually to the solvent comprising the dissolved plastic and in which the pressure is reduced below atmospheric pressure during the gradual addition of non-solvent.

4. Process according to any one of the preceding claims, in which the solubility parameter of the solvent is close to that of the plastic, and that of the phase-separating agent is :
- lower than the solubility parameter of the plastic if the solubility parameter of the non-solvent is higher than that of the plastic
- higher than the solubility parameter of the plastic if the solubility parameter of the non-solvent is lower than that of the plastic.

5. Process according to any one of the preceding claims, in which the non-solvent is water and the phase-separating agent is a non-polar organic compound.

6. Process according to any one of the preceding claims, in which the solvent and the phase-separating agent are substantially removed from the precipitation medium by evaporation at a temperature lower than the boiling point of the non-solvent.

7. Process according to Claim 6, where the solvent is miscible with the non-solvent and forms an azeotropic mixture with the same.

8. Process according to Claim 6 or 7, in which the vapour comprising the solvent and the phase-separating agent also comprises a substantial fraction of non-solvent, and in which this vapour is condensed and subjected to a settlement process and to subsequent removal of the phase rich in non-solvent prior to reuse for the dissolution of the plastic.

9. Process according to Claim 6 or 7, in which the vapour comprising the solvent and the phase-separating agent is condensed and reused without further processing for the dissolution of the plastic, without any prior settlement process.

10. Process according to any one of the preceding claims, where the plastic is PVC, the solvent is MEK, the non-solvent is water and the phase-separating agent is an aliphatic hydrocarbon having from 5 to 7 carbon atoms.

11. Process according to Claim 8, where the phase-separating agent is n-hexane.

12. Process according to any one of the preceding claims, in which the plastic is PVC and according to which :
(a) the PVC is brought into contact with the solvent and the phase-separating agent and is dissolved;
(b) the precipitation of the PVC dissolved in the solvent is brought about by injecting steam into the resultant solution, which permits removal of the solvent and the phase-separating agent by evaporation and thus gives a remaining mixture essentially consisting of water and of solid particles of PVC;
(c) the particles of PVC are recovered.
